(19) Europäisches Patentamt
European Patent Office
Office européen des brevets

(11) **EP 4 535 456 A1**

(12) **EUROPEAN PATENT APPLICATION**
published in accordance with Art. 153(4) EPC

(43) Date of publication:
**09.04.2025 Bulletin 2025/15**

(21) Application number: **23904051.2**

(22) Date of filing: **15.12.2023**

(51) International Patent Classification (IPC):
*H01M 4/136* (2010.01)     *H01M 4/62* (2006.01)
*H01M 4/58* (2010.01)      *H01M 10/052* (2010.01)
*H01M 4/02* (2006.01)

(52) Cooperative Patent Classification (CPC):
**H01M 4/02; H01M 4/136; H01M 4/58; H01M 4/62;
H01M 10/052; Y02E 60/10**

(86) International application number:
**PCT/KR2023/020753**

(87) International publication number:
**WO 2024/128852 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.12.2022 KR 20220177477**

(71) Applicant: **LG Energy Solution, Ltd.
Seoul 07335 (KR)**

(72) Inventors:
• **YOO, Houng Sik
  Daejeon 34122 (KR)**

• **KIM, Young Gon
  Daejeon 34122 (KR)**
• **LEE, Jong Won
  Daejeon 34122 (KR)**
• **KIM, Dong Hyun
  Daejeon 34122 (KR)**
• **YANG, Gui Eum
  Daejeon 34122 (KR)**
• **CHOY, Sang Hoon
  Daejeon 34122 (KR)**
• **CHOI, Hyeon
  Daejeon 34122 (KR)**

(74) Representative: **Plasseraud IP
104 Rue de Richelieu
CS92104
75080 Paris Cedex 02 (FR)**

(54) **POSITIVE ELECTRODE AND LITHIUM SECONDARY BATTERY COMPRISING SAME**

(57)    The present technology relates to a positive electrode and a lithium secondary battery manufactured using the same, and the positive electrode includes: a positive electrode current collector; a first positive electrode active material layer formed on one or both sides of the positive electrode current collector; and a second positive electrode active material layer formed on the first positive electrode active material layer; wherein the first and second positive electrode active material layers each comprise lithium iron phosphate, a conductive material, a fluorine-based binder, a rubber-based binder, and a rubber-based dispersant, and the ratio (P2/P1) of the weight P2 of the fluorine contained in the second positive electrode active material layer to the weight P1 of the fluorine contained in the first positive electrode active material layer is 1 or less, and the weight (A) of the first positive electrode active material layer is in the range of 17% to 99% of the total weight (A+B) of the first positive electrode active material layer and the second positive electrode active material layer.

**EP 4 535 456 A1**

**Description**

[Technical Field]

This application claims priority to and the benefit of Korean Patent Application No. 10-2022-0177477, filed on December 16, 2022, the disclosure of which is incorporated herein by reference in its entirety.
The present disclosure relates to a positive electrode and a lithium secondary battery manufactured using the same.

[Background Art]

As the technology development of and demand for electric vehicles and energy storage systems (ESSs) increase, the demand for batteries as an energy source is rapidly increasing, and accordingly, various studies on batteries capable of meeting various needs have been conducted. In particular, studies have been actively conducted on a lithium secondary battery having high energy density and excellent lifespan and cycle characteristics as a power source for such devices.
As a positive electrode active material of the lithium secondary battery, lithium cobalt oxides (LCO), lithium nickel cobalt manganese oxides (LNCMO), lithium iron phosphate (LFP), and the like have been used.
Lithium iron phosphate is inexpensive because it is abundant in resources and includes iron, which is a low-cost material. In addition, since lithium iron phosphate has low toxicity, environmental pollution can be reduced when lithium iron phosphate is used. In addition, since lithium iron phosphate has an olivine structure, an active material structure can be stably maintained at a high temperature as compared to lithium transition metal oxides having a layered structure. Accordingly, it has the advantage of excellent high-temperature stability and high-temperature lifespan characteristics of the battery.
However, compared to lithium transition metal oxides such as lithium nickel cobalt manganese oxide, lithium iron phosphate has problems of low lithium mobility and low electrical conductivity. Consequently, lithium iron phosphate with a small average particle diameter is used to form a short lithium movement path, the surface of lithium iron phosphate is coated with carbon to improve the electrical conductivity, and an excessive amount of conductive material is used.
However, as the size of lithium iron phosphate particles decreases, the specific surface area increases, and lithium iron phosphate with a carbon-coated surface has lower wetting by solvents. As a result, the particle agglomeration of lithium iron phosphate is severe, which reduces the stability of the positive electrode slurry and the coating processsability, and the effective mixing of lithium iron phosphate and binder is not possible, which reduces the adhesion between the positive electrode collector and the positive electrode active material layer (hereinafter referred to as positive electrode adhesion) in the manufactured positive electrode. This phenomenon can be intensified in high-loading positive electrodes.
Low positive electrode adhesion can cause dissociation of the positive electrode active material layer during electrode manufacturing or during charge and discharge, resulting in increased battery resistance and reduced capacity of the secondary battery.
With the increasing demand for high-energy density batteries, technology is needed to improve positive electrode adhesion in positive electrodes containing lithium iron phosphate, while achieving a loading of 550 mg/25cm$^2$ or more.

[Disclosure]

[Technical Problem]

The present invention is directed to solving the above-mentioned problems, and aims to provide an adhesion between a positive electrode collector and a positive electrode active material layer in a high-loading positive electrode, and a lithium secondary battery manufactured using the same, in which electrode dislocation is prevented by improving flexibility.

[Technical Solution]

According to one embodiment of the present invention, a positive electrode is provided. The positive electrode comprising: a positive electrode current collector; a first positive electrode active material layer formed on one or both sides of the positive electrode current collector; and a second positive electrode active material layer formed on the first positive electrode active material layer; wherein the first and second positive electrode active material layers each comprise lithium iron phosphate, a conductive material, a fluorine-based binder, a rubber-based binder, and a rubber-based dispersant, and the ratio (P2/P1) of the weight P2 of the fluorine contained in the second positive electrode active material layer to the weight P1 of the fluorine contained in the first positive electrode active material layer is 1 or less, and the weight (A) of the first positive electrode active material layer is in the range of 17% to 99% of the total weight (A+B) of the first positive electrode active material layer and the second positive electrode active material layer.

In exemplary embodiments, the weight (A) of the first positive electrode active material layer may range from 20% to 85% of the combined weight (A+B) of the first positive electrode active material layer and the second positive electrode active material layer.

In exemplary embodiments, the rubber-based binder and the rubber-based dispersant may be hydrogenated nitrile butadiene rubber (HNBR), respectively.

In exemplary embodiments, the rubber-based binder may be a hydrogenated nitrile butadiene rubber (HNBR) having a weight-average molecular weight (Mw) of at least 130,000 g/mol, preferably in the range of 150,000 g/mol to 1,000,000 g/mol.

In exemplary embodiments, the rubber-based dispersant may be a hydrogenated nitrile butadiene rubber (HNBR) having a weight-average molecular weight (Mw) in the range of 10,000 g/mol to 100,000 g/mol.

In exemplary embodiments, the lithium iron phosphate included in the first positive electrode active material layer may comprise a first lithium iron phosphate having an average particle diameter $D_{50}$ of 0.5 $\mu$m to 2 $\mu$m and a second lithium iron phosphate having an average particle diameter $D_{50}$ of 3.5 $\mu$m to 15 $\mu$m.

In this case, the weight ratio of the first lithium iron phosphate and the second lithium iron phosphate may be 50:50 to 99.9: 0.1.

In exemplary embodiments, the lithium iron phosphate included in the second positive electrode active material layer may have an average particle diameter $D_{50}$ of 0.6 $\mu$m to 3.0 $\mu$m.

In exemplary embodiments, the lithium iron phosphate may be the compound represented by Formula 1 below.

[Formula 1]. $\qquad Li_{1+a}Fe_{1-x}M_x(PO_{4-b})X_b$

(In Formula 1 above, M comprises one or more elements selected from the group consisting of Al, Mg, Ni, Co, Mn, Ti, Ga, Cu, V, Nb, Zr, Ce, In, Zn, and Y, X comprises one or more elements selected from the group consisting of F, S, and N, and a, b, and x are $-0.5 \leq a \leq 0.5$, $0 \leq b \leq 0.1$, and $0 \leq x \leq 0.5$, respectively.)

In exemplary embodiments, the fluorine-based binder may be included in the first positive electrode active material layer in an amount ranging from 1.5 wt% to 3.0 wt%.

In exemplary embodiments, the fluorine-based binder may be included in the second positive electrode active material layer in an amount ranging from 0.8 wt% to 2.4 wt%.

In exemplary embodiments, the fluorine-based binder may be a polyvinylidene fluoride (PVdF)-based polymeric binder.

In exemplary embodiments, the rubber-based binder included in each of the first and second positive electrode active material layers may satisfy condition 1 below.

[Condition 1].

$$1 \leq R2/R1 \leq 3$$

R1 indicates the content (wt%) of rubber-based binder in the first positive electrode active material layer,
R2 indicates the content (wt%) of rubber-based binder in the second positive electrode active material layer.

In exemplary embodiments, the rubber-based binder may be included in the first positive electrode active material layer in an amount ranging from 0.2 wt% to 0.9 wt% and in the second positive electrode active material layer in an amount ranging from 0.3 wt% to 1.0 wt%.

In exemplary embodiments, the conductive material may be carbon nanotubes.

In exemplary embodiments, the conductive material may be included in each of the first and second positive electrode active material layers, in an amount ranging from 0.3 wt% to 2.0 wt%.

The present disclosure also provides a lithium secondary battery comprising the positive electrode described above.

[Advantageous Effects]

Since the positive electrode according to the present invention includes a first positive electrode active material layer that maximizes adhesion and a second positive electrode active material layer that contributes to improved flexibility, the positive electrode can have excellent adhesion and flexibility with a low binder content compared to a conventional single-layer positive electrode.

In addition, the positive electrode according to the present invention has excellent adhesion by controlling the weight ratio of the first positive electrode active material layer and the second positive electrode active material layer to an appropriate range.

[Best Mode]

Hereinafter, the present invention will be described in more detail to provide a better understanding of the present invention.

Hereinafter, the present invention will be described in detail with reference to the drawings. Prior to this, terms and words used in the present specification and claims should not be construed as limited to general or dictionary terms and should be interpreted with the meaning and concept in accordance with the technical idea of the present invention based on the principle that the inventors have appropriately defined the concepts of terms in order to explain the invention in the best way.

The terms used in this specification are used to describe exemplary embodiments only and are not intended to limit the present invention. Expressions in the singular include the plural unless the context clearly indicates otherwise.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In the present specification, "%" refers to wt% unless clearly described otherwise.

In this specification, the average particle diameter ($D_{50}$) can be defined as the particle diameter at 50% of the particle diameter distribution and can be measured using a laser diffraction method. Specifically, the average particle diameter ($D_{50}$) can be calculated by dispersing the target particles in a dispersant, introducing them into a commercially available laser diffraction particle size measurement device (e.g., Microtrac MT 3000), irradiating them with ultrasonic waves of about 28 kHz at a power of 60 W, and then calculating the average particle diameter ($D_{50}$) at 50% of the cumulative distribution of particle volumes according to the particle diameter in the measurement device.

In the specification, "phi (ø)" refers to the diameter of the measuring rod in millimeters (mm).

In the present specification, a "specific surface area" is measured by a Brunauer-Emmet-Teller (BET) method and may be specifically calculated from the amount of nitrogen gas adsorbed at a liquid nitrogen temperature (77 K) using BELSORP-mini II commercially available from BEL Japan.

In the present specification, a "weight-average molecular weight (Mw)" refers to a conversion value with respect to standard polystyrene measured through gel permeation chromatography (GPC). Specifically, the weight-average molecular weight is a value obtained by converting a value measured under the following conditions using GPC, and standard polystyrene of an Agilent system is used to make a calibration curve.

< Measurement conditions >

Measurement instrument: Agilent GPC (Agilent 1200 series, USA)
Column: connected two PL Mixed B
Column temperature: 40 °C
Eluent: tetrahydrofuran
Flow rate: 1.0 mL/min
Concentration: ~1 mg/mL (100 μL injection)

In the present specification, positive electrode adhesion may be measured as follows. A positive electrode cut into a size having a length of 150 mm and a width of 20 mm is prepared and attached in a lengthwise direction to a slide glass having a length of 75 mm and a width of 25 mm using a double-sided tape so that a positive electrode active material layer faces the slide glass. That is, the slide glass is attached to a region corresponding to half of the lengthwise direction of the positive electrode. Thereafter, rubbing is performed 10 times using a roller so that the double-sided tape is uniformly attached, thereby preparing an evaluation sample. Next, the slide glass part of the evaluation sample is fixed to a sample stage of a universal testing machine (UTM; LS5, AMETEK), and the half of the positive electrode to which the slide glass is not attached is connected to a load cell of the UTM. A load applied to the load cell is measured while moving the load cell up to 50 mm with a force at an angle of 90° and a speed of 100 mm/min. In this case, an average value of the load measured in a section of 20 mm to 40 mm during a driving section is obtained. This process is repeated a total of 5 times, and the average value is evaluated as positive electrode adhesion (gf/20 mm) of each sample.

The present invention provides a positive electrode and a lithium secondary battery manufactured using the same.

Generally, lithium iron phosphate used as a positive electrode active material has low lithium mobility and low electrical conductivity compared to lithium transition metal oxides such as lithium nickel cobalt manganese oxide, so lithium iron phosphate with a small average particle diameter is often used as a positive electrode active material. However, the small size of the lithium iron phosphate particles increases the specific surface area, which can lead to severe particle agglomeration, which prevents effective mixing of the lithium iron phosphate and binder, resulting in reduced positive electrode adhesion. In addition, the fluorine-based binder used as the positive electrode binder is characterized by better adhesion to the lithium iron phosphate particles than to the positive electrode current collector, so that when the positive electrode active material is lithium iron phosphate, the interfacial adhesion between the positive electrode current collector and the positive electrode active material layer is reduced compared to when the positive electrode active material is lithium nickel cobalt manganese oxide. Accordingly, the positive electrode comprising lithium iron phosphate as the positive electrode active material has the problem that the positive electrode active material layer is dissociated during electrode manufacturing or charging and discharging, resulting in an increase in the resistance of the battery and a decrease in the capacity of the secondary battery. In addition, compared to positive electrodes comprising lithium nickel cobalt manganese oxide as the positive electrode active material, positive electrodes comprising lithium iron phosphate have poor brittleness due to the characteristics of the positive electrode active material, and are vulnerable to dissociation of the positive electrode active material layer due to physical external forces.

Accordingly, the inventors of the present invention have researched to solve these problems, and have found that the positive electrode active material layer is composed of a plurality of layers rather than a single layer, wherein the first and second positive electrode active material layers each contain lithium iron phosphate, a conductive material, a fluorine-based binder, a rubber-based binder, and a rubber-based dispersant, respectively, and the ratio (P2/P1) of the weight P2 of the fluorine contained in the second positive electrode active material layer to the weight P1 of the fluorine contained in the first positive electrode active material layer is 1 or less, wherein the weight (A) of the first positive electrode active material layer is in the range of 17% to 99% of the sum weight (A+B) of the first positive electrode active material layer and the second positive electrode active material layer, and the interfacial adhesion between the current collector and the first positive electrode active material layer is excellent, while the dissociation of the positive electrode active material layer is suppressed due to the improved flexibility, resulting in the present invention.

The positive electrode according to exemplary embodiments of the present invention is a structure in which the positive electrode active material layer is in direct contact with the positive electrode current collector, and due to the excellent interfacial adhesion between the positive electrode active material layer and the positive electrode current collector, the positive electrode active material layer may not include a separate layer for improving adhesion between the positive electrode active material layer and the positive electrode current collector. In other words, the positive electrode according to one embodiment of the present invention may exhibit excellent interfacial adhesion between the positive electrode collector and the positive electrode active material layer without the inclusion of a separate layer such as an adhesion layer or an adhesive layer or a bonding layer or a primer coating layer, which may be interposed to improve adhesion.

The positive electrode of the present invention will be described in detail.

A positive electrode according to one embodiment of the present invention may comprise a positive electrode active material layer. Specifically, a positive electrode according to the present invention may include a positive electrode current collector; a first positive electrode active material layer formed on the current collector; and a second positive electrode active material layer formed on the first positive electrode active material layer. The first positive electrode active material layer and the second positive electrode active material layer may be formed on one side or both sides of the current collector.

In exemplary embodiments of the present invention, the weight (A) of the first positive electrode active material layer may range from 17% to 99%, preferably from 20% to 85%, more preferably from 25% to 75%, of the total weight (A+B) of the first positive electrode active material layer and the second positive electrode active material layer. When the proportion of the weight of the first positive electrode active material layer (A) satisfies the above range, it is possible to have the required adhesion to the positive electrode while exhibiting adequate flexibility to prevent the detachment of the positive electrode active material layer due to physical external forces.

The positive electrode current collector is not particularly limited as long as it does not cause a chemical change in the battery and has conductivity. For example, stainless steel, aluminum, nickel, titanium, sintered carbon, or aluminum or stainless steel whose surface has been treated with carbon, nickel, titanium, silver, or the like may be used as the current collector.

The positive electrode current collector may have a thickness of 3 $\mu$m to 500 $\mu$m and may have fine irregularities formed on a surface thereof to increase adhesion to the positive electrode active material layer. For example, the positive electrode current collector may be used in various forms such as a film, a sheet, a foil, a net, a porous body, a foamed body, a non-woven fabric, and the like.

The first positive electrode active material layer and the second positive electrode active material layer may include a positive electrode active material, respectively. Additionally, the first and second positive electrode active material layer may further include a conductive material, a binder, and a dispersant as necessary, in addition to the positive electrode active material.

Hereinafter, each component included in the first and second positive electrode active material layer will be described in detail.

**(1) Positive electrode active material**

The present disclosure includes a lithium transition metal phosphate as the positive electrode active material. The lithium transition metal phosphate has an olivine structure, and thus an active material structure remains stable at a high temperature as compared to lithium transition metal oxides having a layered structure. As a result, when the lithium transition metal phosphate is used as the positive electrode active material, high-temperature stability and high-temperature lifespan characteristics of the positive electrode are remarkably improved, so that the risk of ignition of a lithium secondary battery including the positive electrode may be reduced.

The lithium iron phosphate may be a compound of the formula 1 below.

$$[\text{Formula 1}] \qquad Li_{1+a}Fe_{1-x}M_x(PO_{4-b})X_b$$

In Formula 1, M comprises any one or more elements selected from the group consisting of Al, Mg, Ni, Co, Mn, Ti, Ga, Cu, V, Nb, Zr, Ce, In, Zn, and Y, X comprises any one or more elements selected from the group consisting of F, S, and N, and a, b, and x are - $0.5 \leq a \leq 0.5$, $0 \leq b \leq 0.1$, and $0 \leq x \leq 0.5$, respectively.

For example, the lithium iron phosphate may be $LiFePO_4$.

In the present disclosure, a "monolith structure" means a structure present morphologically in an independent phase in which particles are not agglomerated together. A particle structure in contrast to the monolith structure may include a structure forming a relatively large-sized particle shape (secondary particles) through physical and/or chemical agglomeration of relatively small-sized particles (primary particles).

When the lithium iron phosphate has a monolithic structure consisting of primary particles, it is less likely that the lithium iron phosphate particles will break during the rolling process compared to the secondary particles, and therefore, the capacity reduction due to the dissociation of the broken particles is less. In addition, when the lithium iron phosphate is a primary particle with a monolithic structure, the migration of the binder can be mitigated during the drying process of the positive electrode slurry, which may also be advantageous in terms of interfacial adhesion between the positive electrode current collector and the positive electrode active material layer.

The lithium iron phosphate may include a carbon coating layer on its surface. When a carbon coating layer is formed on the surface of lithium iron phosphate, electrical conductivity can be improved, which can improve the resistance characteristics of the positive electrode.

The carbon coating layer may be formed using one or more raw materials selected from the group consisting of glucose, sucrose, lactose, a starch, an oligosaccharide, a polyoligosaccharide, fructose, cellulose, a furfuryl alcohol polymer, a block copolymer of ethylene and ethylene oxide, a vinyl-based resin, a cellulose-based resin, a phenol-based resin, a pitch-based resin, and a tar-based resin. Specifically, the carbon coating layer may be formed through a process of mixing the raw materials with the lithium transition metal phosphate followed by heat treatment.

The lithium transition metal phosphate may have an average particle diameter $D_{50}$ of 0.5 $\mu$m to 20.0 $\mu$m, preferably 0.5 $\mu$m to 10.0 $\mu$m, and more preferably 0.6 $\mu$m to 3.0 $\mu$m, more preferably 0.6 $\mu$m to 2.5 $\mu$m, and most preferably 0.7 $\mu$m to 1.5 $\mu$m. When the average particle diameter $D_{50}$ of the positive electrode active material satisfies the above range, mobility of lithium in the lithium transition metal phosphate is improved so that charging and discharging characteristics of a battery can be improved.

The lithium transition metal phosphate may have a BET specific surface area of 5 m$^2$/g to 20 m$^2$/g, specifically 7 m$^2$/g to 18 m$^2$/g, and more specifically 9 m$^2$/g to 16 m$^2$/g. The above ranges are lower than conventional lithium iron phosphate. When the above range is satisfied, agglomeration of the lithium transition metal phosphate may be effectively suppressed even in the positive electrode slurry composition having a relatively small amount of a dispersant.

The positive electrode according to one embodiment of the present invention may comprise a first lithium iron phosphate and a second lithium iron phosphate having different ranges of average particle diameters ($D_{50}$) in the first positive electrode active material layer. Specifically, the lithium iron phosphate included in the first positive electrode active material layer may include a first lithium iron phosphate having an average particle diameter $D_{50}$ in the range of 0.5 $\mu$m to 2 $\mu$m and a second lithium iron phosphate having an average particle diameter $D_{50}$ in the range of 3.5 $\mu$m to 15 $\mu$m.

The binder contained in the positive active material layer, particularly a fluorine-based binder, tends to adhere to the iron lithium phosphate rather than to the positive electrode current collector at the interface of the positive electrode current collector and the positive active material layer, a phenomenon that may be increased the larger the specific surface area of the iron lithium phosphate particles. Therefore, if the first positive electrode active material layer that interfaces with the positive electrode current collector includes a second lithium iron phosphate with a large average particle diameter $D_{50}$ and therefore a small specific surface area, the total specific surface area of the lithium iron phosphate to which the binder can be bound is reduced, and the interfacial adhesion between the current collector and the positive electrode active material layer can be dramatically improved.

In one embodiment, the average particle diameter $D_{50}$ of the first lithium iron phosphate may be from 0.5 $\mu$m to 2 $\mu$m, preferably from 0.55 $\mu$m to 1.8 $\mu$m, more preferably from 0.6 $\mu$m to 1.6 $\mu$m. In addition, the average particle diameter $D_{50}$ of the second lithium iron phosphate may be from 3.5 $\mu$m to 15 $\mu$m, preferably from 3.8 $\mu$m to 12 $\mu$m, more preferably from 4 $\mu$m to 10 $\mu$m.

In one embodiment, the weight ratio of the first lithium iron phosphate and the second lithium iron phosphate may be 50:50 to 99.9: 0.1, preferably 55:45 to 95: 1, more preferably 6:4 to 9:1. When the weight ratio of the first lithium iron phosphate and the second lithium iron phosphate satisfies the above range, the effect of improving adhesion is excellent and the electrical performance of the positive electrode is excellent. If there is too much secondary lithium iron phosphate with a relatively large average particle diameter, the viscosity of the positive electrode slurry may increase significantly and the rolling performance of the positive electrode may deteriorate, which is not preferable.

The first lithium iron phosphate may be a primary particle, and the second lithium iron phosphate may be a primary particle or a secondary particle.

When the first positive electrode active material layer comprises the first and second lithium iron phosphate, the lithium iron phosphate included in the second positive electrode active material layer may have an average particle diameter ($D_{50}$) of 0.5 $\mu$m to 20.0 $\mu$m; 0.5 $\mu$m to 10.0 $\mu$m; 0.5 $\mu$m to 2 $\mu$m; 0.55 $\mu$m to 1.8 $\mu$m; 0.6 $\mu$m to 3.0 $\mu$m; 0.6 $\mu$m to 2.5 $\mu$m; 0.6 $\mu$m to 1.6 $\mu$m; 0.7 $\mu$m to 1.5 $\mu$m. The second positive electrode active material layer functions to improve the flexibility of the positive electrode, wherein the lithium iron phosphate included in the second positive electrode active material layer has a smaller average particle diameter, which is preferable in terms of the flexibility of the positive electrode.

The lithium iron phosphate of the present invention may be included in the first and second positive electrode active material layers in equal or different amounts. In a specific example, the lithium iron phosphate may be included in the first positive electrode active material layer in an amount of 93.5 to 98 wt%, more specifically 94 to 97.5 wt%, more specifically 94.5 to 97 wt%, based on the total weight of the first positive electrode active material layer. In addition, lithium iron phosphate may be included in the second positive electrode active material layer in an amount ranging from 94 to 99 wt%, more particularly from 94.5 to 98.5 wt%, more particularly from 95 to 98 wt%, based on the total weight of the second positive electrode active material layer. When the content of lithium iron phosphate satisfies the above range, the battery capacity of the positive electrode can be improved by securing sufficient positive electrode energy density.

**(2) binder**

The first and second positive electrode active material layers comprising the positive electrode according to the present invention each include both a fluorine-based binder and a rubber-based binder as binders.

The fluorine-based binder may be a polyvinylidene fluoride (PVdF)-based polymer including vinylidene fluoride (VdF) as a monomer. Specific examples of the PVdF-based polymer may include a PVdF homopolymer, PVDF-HFP(poly(vinylidene fluoride-co-hexafluoropropylene)), PVDF-CTFE(poly(vinylidene fluoride-co-chlorotrifluoroethylene)), PVDF-TFE(poly(vinylidene tetrafluoroethylene)), PVDF-TrFE(poly(vinylidene trifluoroethylene) and the like.

The fluorine-based binder, together with the rubber-based binder, imparts adhesion between the positive electrode active material and the conductive material, and adhesion between the current collector and the positive electrode active material layer.

The weight-average molecular weight (Mw) of the fluorine-based binder may be from 300,000 to 2,000,000, preferably from 400,000 to 1,500,000, and most preferably from 500,000 to 1,300,000. When the weight average molecular weight of the fluorine-based binder satisfies the above numerical range, it is easy for the viscosity of the positive electrode slurry to be in a desirable range, and the positive electrode adhesion can be maximized with a low content range.

The fluorine-based binders included in each of the first and second positive electrode active material layers may be the same compound, have the same weight-average molecular weight, and the same chemical formula.

In the positive electrode according to exemplary embodiments of the present invention, the content (wt%) of a fluorine-based binder contained in the first positive electrode active material layer of the lower layer is equal to or greater than the content (wt%) of a fluorine-based binder contained in the second positive electrode active material layer of the upper layer, so that the ratio (P2/P1) of the weight P2 of the fluorine contained in the second positive electrode active material layer to the weight P1 of the fluorine contained in the first positive electrode active material layer is 1 or less, more preferably 0.5 to 1, preferably 0.52 to 0.95, more preferably 0.53 to 0.85. If the ratio (P2/P1) of P2 to P1 is greater than 1, it is undesirable in terms of adhesion.

The weight P1 of the fluorine contained in the first positive electrode active material layer and the weight P2 of the fluorine contained in the second positive electrode active material layer satisfying the above ratio range is due to the difference in the content of the fluorine-based binder contained in the first and second positive electrode active material layers, respectively.

In other words, the fluorine-based binder contains a fluorine element, and the lithium iron phosphate, rubber-based binder, rubber-based dispersant, and conductive material comprising the positive electrode of the present invention do not contain a fluorine element, so that the weight of the fluorine contained in the first positive electrode active material layer and the second positive electrode active material layer is proportional to the content (weight) of the fluorine-based binder contained in the first positive electrode active material layer and the second positive electrode active material layer, respectively.

Fluorine-based binders have the advantage of exhibiting excellent adhesion, but because they have a crystalline structure, they are inferior in flexibility compared to rubber-based binders. Therefore, increasing the content of fluorine-based binders with excellent adhesion in the first positive electrode active material layer that interfaces with the positive electrode current collector, and decreasing the content of fluorine-based binders in the second positive electrode active material layer that requires flexibility, has the effect of improving the interfacial adhesion of the positive electrode and preventing the electrode from detaching from the surface of the electrode in case of external impact. Thus, by controlling the content of fluorine-based binder in the first and second positive electrode active material layers as described above, the positive electrode according to the present invention has better adhesion with the same binder content compared to a positive electrode composed of a single layer.

In exemplary embodiments, the fluorine-based binder may be included in said first positive electrode active material layer from 1.5 wt% to 3.0 wt%, preferably from 1.6 wt% to 2.7 wt%, more preferably from 1.7 wt% to 2.5 wt%. In addition, the fluorine-based binder may be included in the second positive electrode active material layer in an amount of from 0.8 wt% to 2.4 wt%, preferably from 1.0 wt% to 2.2 wt%, more preferably from 1.2 wt% to 2.0 wt%.

Further, in the total positive electrode active material layer comprising the first positive electrode active material layer and the second positive electrode active material layer, the fluorine-based binder may be included from 1.2 wt% to 2.6 wt%, preferably from 1.4 wt% to 2.4 wt%, more preferably from 1.6 wt% to 2.2 wt%.

Meanwhile, the rubber-based binder improves the flexibility of the positive electrode, increasing the loading amount of the positive electrode and improving the rolling performance. In addition, the improved flexibility in the event of external physical impact inhibits the detachment of part of the positive electrode active material layer, thus providing an electrode with an excellent capacity.

According to exemplary embodiments of the present invention, the rubber-based binder may be a hydrogenated nitrile butadiene rubber (HNBR). Hydrogenated nitrile butadiene rubber (HNBR) means that the nitrile butadiene rubber (NBR) has been subjected to a hydrogenation reaction such that the double bonds originally contained in the nitrile butadiene rubber (NBR) have become single bonds.

The hydrogenated nitrile butadiene rubber may have a repeating unit content derived from acrylonitrile (AN) of from 20 wt% to 50 wt%, more preferably from 25 wt% to 45 wt%, and most preferably from 30 wt% to 40 wt%, based on the total weight.

The inventors of the present invention have discovered that a hydrogenated nitrile butadiene rubber (HNBR) having a weight-average molecular weight (Mw) of 130,000 g/mol or more dramatically improves the brittleness of a positive electrode comprising lithium iron phosphate as a positive electrode active material. The hydrogenated nitrile butadiene rubber may have a weight-average molecular weight (Mw) of 130,000 g/mol or more, preferably from 150,000 g/mol to 1,000,000 g/mol, more preferably from 200,000 g/mol to 500,000 g/mol. When the weight-average molecular weight (Mw) of the hydrogenated nitrile-based butadiene rubber is in the above range, due to the improved flexibility of the positive electrode active material layer, the rolling density of the positive electrode can be increased, and the increased rolling density can have the effect of lowering the positive electrode resistance.

The rubber-based binder included in each of the first and second positive electrode active material layers may be the same compound, and may have the same weight-average molecular weight and the same chemical formula.

Meanwhile, the rubber-based binders included in each of the first and second positive active material layers may satisfy condition 1 below. The value of R2/R1 below may be preferably 1 to 2.9, more preferably 1.1 to 2.8.

[Condition 1].

$$1 \leq R2/R1 \leq 3$$

R1 represents the content (wt%) of rubber-based binder in the first positive electrode active material layer,
R2 represents the content (wt%) of rubber-based binder in the second positive electrode active material layer.

A value of R2/R1 greater than 3 is undesirable because it may result in an excessive amount of rubber-based binder in the second positive electrode active material layer, which may increase the viscosity of the slurry for the second positive electrode active material layer, resulting in poor coating performance, and conversely, a value of less than 1 is undesirable because it may result in a low amount of rubber-based binder in the second positive electrode active material layer, resulting in poor overall positive electrode flexibility.

In exemplary embodiments, the rubber-based binder may be included in the first positive electrode active material layer from 0.2 wt% to 0.9 wt%, preferably from 0.3 wt% to 0.8 wt%, more preferably from 0.4 wt% to 0.7 wt%. The rubber-based binder may be included in the second positive electrode active material layer from 0.3 wt% to 1.0 wt%, preferably from 0.4 wt% to 0.9 wt%, more preferably from 0.5 wt% to 0.8 wt%. Further, the rubber-based binder may comprise from 0.25 wt% to 0.85 wt%, preferably from 0.35 wt% to 0.75 wt%, more preferably from 0.4 wt% to 0.65 wt%, in the total of the first and second positive electrode active material layers.

When the rubber-based binder is included in each of the first and second positive electrode active material layers to the above extent, the positive electrode flexibility is improved, and the coating stability of the slurry is also improved, so that each of the first and second positive electrode active material layers can be uniformly coated.

In the first positive electrode active material layer, the weight ratio of the fluorine-based binder and the rubber-based binder may be 90:10 to 75:25, preferably 8:1 to 4:1, and more preferably 7:1 to 4:1. When the weight ratio of the fluorine-based binder to the rubber-based binder satisfies the above range, the coating stability of the slurry may be excellent, while the interfacial adhesion between the positive electrode current collector and the first positive electrode active material layer may be excellent.

In the second positive electrode active material layer, the weight ratio of the fluorine-based binder to the rubber-based binder may be 80:20 to 60:40, preferably 75:25 to 60:40. When the weight ratio of the fluorine-based binder to the rubber-based binder satisfies the above range, the coating stability of the slurry is excellent, while the flexibility of the positive electrode is excellent.

Further, the total amount of fluorine-based binder and rubber-based binder included in each of the first and second positive electrode active material layers may be from 1.8 wt% to 3.6 wt%, based on the entire positive electrode active material layer.

**(3) dispersant**

The first and second positive electrode active material layers comprising a positive electrode according to the invention each comprise a rubber-based dispersant.

The dispersant is used to increase the dispersibility of the components of the active material layers. In particular, it increases the dispersibility of the conductive material. The rubber-based dispersant of the present invention also serves to adjust the viscosity of the positive electrode slurry to an appropriate range.

The rubber-based dispersant of the present invention may be a hydrogenated nitrile butadiene rubber (HNBR). Hydrogenated nitrile butadiene rubber (HNBR) means that the double bonds contained in the original nitrile butadiene rubber (NBR) have been converted into single bonds by hydrogen addition reaction.

The hydrogenated nitrile butadiene rubber may have a weight-average molecular weight (Mw) of from 10,000 g/mol to 100,000 g/mol, preferably from 10,000 g/mol to 80,000 g/mol, more preferably from 10,000 g/mol to 50,000 g/mol. When the weight-average molecular weight of the dispersant, hydrogenated nitrile butadiene rubber, satisfies the above range, the solvent wetting and dispersibility of the lithium iron phosphate particles can be improved, and the particle agglomeration of the lithium iron phosphate can be suppressed. In addition, the binder and the lithium iron phosphate particles can be effectively mixed well, which can also contribute to the improvement of the interfacial adhesion between the positive electrode current collector and the first positive electrode active material layer.

The hydrogenated nitrile butadiene rubber also improves the positive electrode conductivity network by inhibiting the agglomeration of the electrode material, and even if the electrode material does agglomerate, it does so in a spherical rather than linear manner, thereby minimizing the specific surface area of the agglomerated electrode material compared to if the electrode material were linearly agglomerated. As a result, the surface area of the positive electrode active material adjacent to the agglomerated electrode material that cannot participate in the lithium insertion/extraction reaction is minimized, thereby lowering the discharge resistance of the lithium secondary battery.

The dispersant may be included in the first positive electrode active material layer in an amount of from 0.01 wt% to 0.7 wt%, preferably from 0.05 wt% to 0.6 wt%, more preferably from 0.1 wt% to 0.5 wt%. The dispersant may also be included in the second positive electrode active material layer in the above ranges. When the content of the dispersant satisfies the above range, the agglomeration of the positive electrode active material can be inhibited, thereby preventing gelation of the positive electrode slurry composition.

**(4) conductive material**

The first and second positive electrode active material layers comprising the positive electrode according to the present invention each comprise a conductive material.

The conductive material is intended to improve the conductivity of the electrode, and is not particularly limited, provided that it has conductivity without causing chemical changes in the cell, for example, graphite; carbon black, such as carbon black, acetylene black, ketchen black, channel black, furnace black, lamp black, summer black, etc; Conductive fibers, such as carbon fibers or metal fibers; metal powders, such as carbon fluoride, aluminum, nickel powder; conductive whiskers, such as zinc oxide, potassium titanate; conductive metal oxides, such as titanium oxide; conductive materials, such as polyphenylene derivatives; and the like. Among them, carbon nanotubes, carbon nanofibers, and carbon black are preferred as the conductive materials of the present invention, with carbon nanotubes being the most preferred. The conductive network of carbon nanotubes is most preferred as a conductive material included in the positive electrode of the present invention because it can alleviate the phenomenon of binder lifting during the drying process of the positive electrode slurry.

A carbon nanotube is a graphite sheet with a nanoscale diameter cylinder shape and an sp2 bond structure, which exhibits the characteristics of a conductor or semiconductor depending on the angle and structure at which the graphite sheet is bent. The carbon nanotubes can be classified as single-walled carbon nanotubes (SWCNTs), or multi-walled carbon nanotubes depending on the number of bonds forming the walls, and these carbon nanotubes can be selected according to the use of the dispersion.

The carbon nanotubes may also have a secondary shape formed by the agglomeration or arrangement of a plurality of carbon nanotubes, for example, a bundle type carbon nanotube in the form of a bundle or rope in which a plurality of carbon nanotubes are arranged or aligned side by side in a certain direction, or an entangled type carbon nanotube in the form of a sphere or potato in which a plurality of carbon nanotubes are intertwined without a certain direction. In terms of dispersibility, the carbon nanotubes are preferably bundled carbon nanotubes.

The BET specific surface area of the carbon nanotubes may be from 100 $m^2/g$ to 1000 $m^2/g$, from 150 $m^2/g$ to 800 $m^2/g$, from 150 $m^2/g$ to 500 $m^2/g$, from 150 $m^2/g$ to 300 $m^2/g$, or from 150 $m^2/g$ to 200 $m^2/g$.

When the conductive material is carbon nanotubes, the conductive material may be included in each of the first and second positive electrode active material layers in an amount of from 0.3 wt% to 2.0 wt%, from 0.6 wt% to 1.5 wt%, and more particularly from 0.7 wt% to 1.3 wt%. If the content of the conductive material is less than 0.3 wt%, the binder lifting phenomenon may be further increased during electrode drying, which is undesirable, and if the content of the conductive material is greater than 2.0 wt%, the content of the dispersant may be increased together with the content of the positive electrode active material, which is undesirable.

The conductive material may be included in the first and second positive electrode active material layers in the same content or in different content, and if the content of the conductive material included in the first and second positive electrode active material layers is different, condition 2 below may be satisfied.

[Condition 2]

$$0.5 \le E2/E1 \le 0.9$$

E1 indicates the linear conductive material content (wt%) in the first positive electrode active material layer,
E2 indicates the linear conductive material content (wt%) in the second positive electrode active material layer.

In the positive electrode satisfying the above condition 3, the content of the conductive material in the first positive electrode active material layer interfacing with the positive electrode collector is greater than the content of the conductive material in the second positive electrode active material layer, so that a conductive network is well formed by the conductive material in the first positive electrode active material layer, and the conductive network suppresses the binder migration phenomenon, thereby improving the interfacial adhesion between the positive electrode collector and the first positive electrode active material layer. And the improved interfacial adhesion can suppress the volume change during charge and discharge, thereby reducing the interfacial resistance of the positive electrode, thereby improving the resistance characteristics of the positive electrode.

If condition 2 is satisfied, the conductive material may be included in the first positive electrode active material layer in an amount ranging from 1.0 wt% to 1.5 wt%, preferably from 1.1 wt% to 1.4 wt%. In addition, the conductive material may be included in the second positive electrode active material layer in an amount ranging from 0.4 wt% to 0.95 wt%, preferably from 0.6 wt% to 0.90 wt%.

A positive electrode according to the present invention can be manufactured according to conventional methods for manufacturing positive electrodes. Specifically, the positive electrode may be prepared by preparing a positive electrode slurry composition comprising the positive electrode active material, a conductive material, a binder, and a dispersant, applying the positive electrode slurry composition to a positive electrode current collector, and then drying and rolling.

In another method, the positive electrode may also be prepared by casting the positive electrode slurry composition onto a separate support and then laminating the film obtained by peeling from this support onto the positive electrode current collector.

According to one embodiment of the present invention, the positive electrode may have a porosity calculated by Formula 1 below in the range of 26% to 34%, preferably in the range of 26.5% to 33%, more preferably in the range of 27% to 30%. When the porosity of the positive electrode satisfies the above ranges, both the flexibility and resistance properties of the positive electrode may be excellent.

Porosity (%) = {1- (measured density of positive electrode active material layer/true density of positive electrode active material)} ×100     [Equqtion 1]

The porosity means the porosity of the positive electrode active material layer including both the first and second positive electrode active material layers. In Equation 1, the "measured density of positive electrode active material layer" is the density calculated by measuring the weight and volume of the positive electrode active material layer separated from the positive electrode collector of the rolled positive electrode, and the "true density of positive electrode active material" is the density of the volume of the positive electrode active material particles themselves excluding pores, which can be measured using a Pycnometer (AccuPycII 1340).

The porosity can be adjusted to the above numerical range during the manufacturing process of the positive electrode by appropriately adjusting the thickness change rate of the positive electrode active material layer before and after rolling during the rolling process. Specifically, the larger the thickness change rate before and after rolling, the smaller the porosity may be, and conversely, the smaller the thickness change rate before and after rolling, the larger the porosity of the positive electrode active material layer. The thickness change rate may be calculated as follows.

Thickness change rate = (thickness of positive electrode active material layer before rolling - thickness of positive electrode active material layer after rolling)/ thickness of positive electrode active material layer before rolling

The thickness change rate can be controlled by the preload applied to the positive electrode during rolling of the positive electrode, i.e., the larger the preload, the larger the thickness change rate before and after rolling, and the smaller the preload, the smaller the thickness change rate before and after rolling.

Since the positive electrode according to one embodiment of the present invention includes a first positive electrode active material layer that maximizes adhesion and a second positive electrode active material layer that maximizes flexibility, the positive electrode adhesion and flexibility can be achieved with less binder content compared to conventional single-layer positive electrode.

As a result, high-loading positive electrodes can be manufactured, the cell resistance of the secondary cell is reduced by preventing positive electrode dissociation, the capacity and output characteristics of the battery are improved, and defects in the manufacturing process are reduced.

The positive electrode of the present invention may have an adhesion between the positive electrode current collector and the positive electrode active material layer of at least 20 gf/20 mm, more specifically at least 25 gf/20 mm, as measured by a 90° peeling test.

Further, the positive electrode of the present invention may have a flexibility such that, in a flexibility test in which the positive electrode is lifted after contacting a phi measuring rod on the positive electrode active material layer, the maximum phi (ø) value of the measuring rod that causes a crack is 5 phi (ø) or less, more particularly 4 phi (ø) or less, and even more particularly 3 phi (ø) or less.

**Lithium secondary battery**

Next, a lithium secondary battery according to the present invention will be described.

A lithium secondary battery according to one embodiment of the present disclosure may include a positive electrode, a negative electrode, a separator interposed between the positive electrode and the negative electrode, and an electrolyte.

In the lithium secondary battery, the positive electrode is the same as described above.

For example, the positive electrode includes: a positive electrode current collector; a first positive electrode active material layer formed on one or both sides of the positive electrode current collector; and a second positive electrode active material layer formed on the first positive electrode active material layer; wherein the first and second positive electrode active material layers each comprise lithium iron phosphate, a conductive material, a fluorine-based binder, a rubber-based binder, and a rubber-based dispersant, and the ratio (P2/P1) of the weight P2 of the fluorine contained in the second positive electrode active material layer to the weight P1 of the fluorine contained in the first positive electrode active material layer is 1 or less, and wherein the weight (A) of the first positive electrode active material layer is in the range of 17% to 99% of the total weight (A+B) of the first and second positive electrode active material layers.

The rubber-based binder may be a hydrogenated nitrile butadiene rubber (HNBR) having a weight-average molecular weight (Mw) of 130,000 g/mol or more.

The rubber-based dispersant may be a hydrogenated nitrile butadiene rubber (HNBR) having a weight-average molecular weight (Mw) in the range of 10,000 g/mol to 100,000 g/mol.

The rubber-based binder included in each of the first and second positive electrode active material layers may satisfy condition 1 below.

[Condition 1].

$$1 \leq R2/R1 \leq 3$$

R1 indicates the content (wt%) of rubber-based binder in the first positive electrode active material layer,
R2 indicates the content (wt%) of rubber-based binder in the second positive electrode active material layer.

The lithium iron phosphate, fluorine-based binder, rubber-based binder, and rubber-based dispersant included in the first and second positive active material layers have been described in detail previously, and repetitive descriptions will be omitted.

The negative electrode may be prepared, for example, by preparing a negative electrode-forming composition comprising a negative electrode active material, a negative electrode binder, and a negative electrode conductive material on a negative electrode current collector, and then applying the composition to the negative electrode current collector.

The negative electrode active material is not particularly limited, and any compound capable of reversibly intercalating and deintercalating lithium may be used. Specific examples thereof include: carbonaceous materials such as artificial graphite, natural graphite, graphitized carbon fiber, amorphous carbon, high-crystallinity carbon, and the like; metallic compounds capable of alloying with lithium, such as Si, Al, Sn, Pb, Zn, Bi, In, Mg, Ga, Cd, a Si alloy, a Sn alloy, an Al alloy, and the like; and composites including metallic compounds and carbonaceous materials. In addition, examples of low-crystallinity carbon include soft carbon and hard carbon, and examples of high-crystallinity carbon include natural graphite, Kish graphite, pyrolytic carbon, mesophase pitch-based carbon fiber, meso-carbon microbeads, mesophase pitches, and high-temperature sintered carbon such as petroleum or coal tar pitch-derived cokes, which may be used alone or in a mixture of two or more thereof. In addition, as the negative electrode active material, a lithium metal thin film may be used.

The negative electrode conductive material is used to impart conductivity to the electrode, and any conductive material that does not cause a chemical change in a battery and has conductivity may be used without particular limitation. Specific examples of the negative electrode conductive material include graphite such as natural graphite, artificial graphite, and the like; carbon-based materials such as carbon black, acetylene black, Ketjen black, channel black, furnace black, lamp black, thermal black, carbon fibers, carbon nanotubes, and the like; powders or fibers of metals such as copper, nickel, aluminum, silver, and the like; conductive whiskers such as zinc oxide, potassium titanate, and the like; conductive metal oxides such as titanium oxide and the like; and conductive polymers such as polyphenylene derivatives and the like, which may be used alone or in a mixture of two or more thereof. The negative electrode conductive material may be typically included in an amount of 1 to 30 wt%, specifically 1 to 20 wt%, and more specifically 1 to 10 wt% with respect to the total weight of a negative electrode active material layer.

The negative electrode binder serves to enhance adhesion between negative electrode active material particles and adhesion between the negative electrode active material and the negative electrode current collector. Specific examples of the negative electrode binder include polyvinylidene fluoride (PVdF), a vinylidene fluoride-hexafluoropropylene copolymer (PVdF-co-HFP), polyvinyl alcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), a sulfonated EPDM, styrene butadiene rubber (SBR), fluororubber, and various copolymers thereof, which may be used alone or in a mixture of two or more thereof. The negative electrode binder may be included in an amount of 1 wt% to 30 wt%, specifically 1 wt% to 20 wt%, and more specifically 1 wt% to 10 wt% with respect to the total weight of the negative electrode active material layer.

Meanwhile, the negative electrode current collector is not particularly limited as long as it does not cause a chemical change in a battery and has high conductivity. For example, copper, stainless steel, aluminum, nickel, titanium, sintered carbon, or copper or stainless steel whose surface has been treated with carbon, nickel, titanium, silver, or the like, an aluminum-cadmium alloy, or the like may be used as the negative electrode current collector.

In addition, the negative electrode current collector may have a thickness of 3 to 500 μm, and like the positive electrode current collector, fine irregularities may be formed on a surface of the negative electrode current collector to increase the binding force of the negative electrode active material. For example, the negative electrode current collector may be used in various forms including a film, a sheet, a foil, a net, a porous body, a foamed body, a non-woven fabric, and the like.

Meanwhile, as the separator in the lithium secondary battery, any separator that is typically used as a separator in a lithium secondary battery may be used without particular limitation, and in particular, a separator that exhibits low resistance to the migration of electrolyte ions and has an excellent electrolyte impregnation ability is preferred. Specifically, a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a typical porous non-woven fabric, for example, a non-woven fabric formed of a high melting point glass fiber or a polyethylene terephthalate fiber, may be used. In addition, the separator may be a porous thin film having a pore diameter of 0.01 μm to 10 μm and a thickness of 5 μm to 300 μm.

Meanwhile, in the lithium secondary battery, the electrolyte may include an organic solvent and a lithium salt, which are typically used in an electrolyte, and they are not particularly limited.

As the organic solvent, any solvent that may serve as a medium through which ions involved in an electrochemical reaction of a battery can migrate may be used without particular limitation. Specifically, as the organic solvent, an ester-based solvent such as methyl acetate, ethyl acetate, γ-butyrolactone, ε-caprolactone, or the like; an ether-based solvent such as dibutyl ether, tetrahydrofuran, or the like; a ketone-based solvent such as cyclohexanone or the like; an aromatic hydrocarbon-based solvent such as benzene, fluorobenzene, or the like; or a carbonate-based solvent such as dimethyl carbonate (DMC), diethyl carbonate (DEC), methyl ethyl carbonate (MEC), ethyl methyl carbonate (EMC), ethylene carbonate (EC), propylene carbonate (PC), or the like may be used.

Among these, a carbonate-based solvent is preferably used, and a mixture of a cyclic carbonate having high ionic conductivity and a high dielectric constant, such as ethylene carbonate or propylene carbonate, which can increase the charge and discharge performance of the battery, and a linear carbonate-based compound with low viscosity (for example, ethyl methyl carbonate, dimethyl carbonate, diethyl carbonate, or the like) is more preferably used.

The lithium salt is not particularly limited as long as it is a compound capable of providing lithium ions used in a lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, $LiB(C_2O_4)_2$, or the like may be used as the lithium salt. The lithium salt is preferably included at a concentration of about 0.6 mol% to 2 mol% in the electrolyte.

In addition to the above electrolyte components, the electrolyte may also contain, for example, pyridine, triethylphosphite, triethanolamine, cyclic ether, ethylenediamine, N-glyme, for the purpose of improving the life characteristics of the cell, inhibiting the reduction of the cell capacity, improving the discharge capacity of the cell, etc, hexane triamide, nitrobenzene derivatives, sulfur, quinone imine dyes, N-substituted oxazolidinones, N,N-substituted imidazolidines, ethylene glycol dialkyl ether, ammonium salts, pyrroles, 2-methoxyethanol, or aluminum trichloride. The additives may be included in an amount of 0.1 to 5 wt% based on the total weight of the electrolyte.

The lithium secondary battery according to the present disclosure may be manufactured by interposing a separator between the positive electrode and the negative electrode to form an electrode assembly, placing the electrode assembly in a cylindrical battery case or a prismatic battery case, and injecting an electrolyte. Alternatively, the lithium secondary battery may be manufactured by stacking the electrode assembly, impregnating the same with an electrolyte, placing the resultant in a battery case, and sealing the battery case.

In the manufacture of the lithium secondary battery according to the present disclosure, the electrode assembly may be dried to remove one or more organic solvents selected from the group consisting of N-methyl-2-pyrrolidone (NMP), acetone, ethanol, propylene carbonate, ethylmethyl carbonate, ethylene carbonate, and dimethyl carbonate, which are used in the manufacture of the positive electrode. When an electrolyte having the same components as the organic solvent used in the manufacture of the positive electrode is used as the electrolyte, the process of drying the electrode assembly may be omitted.

Unlike the above-described lithium secondary battery, a lithium secondary battery according to another embodiment of the present disclosure may be an all-solid-state battery.

As the battery case, any battery case that is typically used in the art may be used, and there is no limitation on an outer shape according to the purpose of the battery. For example, the outer shape of the battery case may be a cylindrical shape using a can, a prismatic shape, a pouch shape, a coin shape, or the like.

The lithium secondary battery according to the present disclosure is useful in the fields of portable devices such as mobile phones, laptop computers, digital cameras, and the like, energy storage systems (ESSs), and electric vehicles such as hybrid electric vehicles (HEVs) and the like due to stably exhibiting excellent discharge capacity, output characteristics, and a capacity retention rate.

Hereinafter, the present disclosure will be described in more detail with reference to examples. However, the following examples are merely presented to exemplify the present disclosure, and the scope of the present disclosure is not limited to the following examples.

**Example 1: Manufacture of positive electrode**

(1) Preparation of first positive electrode slurry

A dispersion containing carbon nanotubes (CNT, BET specific surface area; 250 $m^2/g$) as a conductive material and hydrogenated nitrile butadiene rubber with a weight-average molecular weight (Mw) of 30,000 g/mol as a rubber-based dispersant was prepared.

Lithium iron phosphate with an average particle diameter $D_{50}$ of 1. 1 $\mu m$, $LiFePO_4$ as a primary particle with a monolithic structure, polyvinylidene fluoride (PVdF) having a weight-average molecular weight (Mw) of 1,000,000 g/mol as a fluorine-based binder, hydrogenated nitrile butadiene rubber having a weight-average molecular weight (Mw) of 310, 000 g/mol as a rubber-based binder, and the rubber-based dispersant was added to an N-methylpyrrolidone (NMP) solvent, and then mixed at 2500 rpm for 90 minutes using a homo-disperse to prepare a first positive slurry. In the first positive electrode slurry, the lithium iron phosphate, the conductive material, the fluorine-based binder, the rubber-based binder, and the rubber-based dispersant were present in a weight ratio of 96 : 1.0 : 2.2 : 0.5 : 0.3. In addition, the solids in the first positive electrode slurry were 62 wt%.

(2) Preparation of second positive electrode slurry

The second positive electrode slurry was prepared in the same manner as the first positive electrode slurry, except that the weight ratio of the lithium iron phosphate, conductive material, fluorine-based binder, rubber-based binder, and rubber-based dispersant in the positive electrode slurry was changed to 96.8 : 1.0 : 1.4 : 0.5 : 0.3. The solids in the second positive electrode slurry were 67 wt%.

(3) Manufacture of second positive electrode

Using a dual-slot die coater, on an aluminum foil, coated with a first positive electrode slurry at a loading amount of 450 $mg/25cm^2$ and a second positive electrode slurry at a loading amount of 150 $mg/25cm^2$, wherein the second positive electrode slurry was coated in such a way that the second positive electrode slurry was laminated on the first positive electrode slurry.

Then, the positive electrode slurry was hot air dried at 130°C for 5 minutes so that the solids content of the positive electrode slurry was greater than 99.0 wt%. Then, a positive electrode was prepared by rolling the positive electrode active material layer to have a porosity of 29%. The porosity refers to the porosity calculated by Equation 1 below.

Porosity (%) = {1- (measured density of positive electrode active material layer/true density of positive electrode active material)} $\times$ 100    [Equation 1]

**Example 2: Manufacture of positive electrode**

The manufacturing of the positive electrode was performed in the same manner as in Example 1, except that the first positive electrode slurry was coated with a loading amount of 300 $mg/25cm^2$ and the second positive electrode slurry was coated with a loading amount of 300 $mg/25cm^2$.

**Example 3: Manufacture of positive electrode**

The manufacturing of the positive electrode was performed in the same manner as in Example 1, except that the first positive electrode slurry was coated with a loading amount of 150 $mg/25cm^2$ and the second positive electrode slurry was coated with a loading amount of 450 $mg/25cm^2$.

**Example 4: Manufacture of positive electrode**

The positive electrode was manufactured as in Example 1, except that the first lithium iron phosphate, $LiFePO_4$, a primary particle with an average particle diameter $D_{50}$ of 1.1 $\mu m$ and a monolithic structure, and the second lithium iron phosphate, $LiFePO_4$, a secondary particle with an average particle diameter $D_{50}$ of 7 $\mu m$, were used in a ratio of 70:30, and the second positive electrode was coated with a loading amount of 300 $mg/25cm^2$ of the first positive electrode slurry and 300 $mg/25cm^2$ of the second positive electrode slurry.

**Example 5: Manufacture of positive electrode**

The positive electrode was manufactured as in Example 1, except that the first lithium iron phosphate, LiFePO$_4$, a primary particle with an average particle diameter D$_{50}$ of 1.1 $\mu$m and a monolithic structure, and the second lithium iron phosphate, LiFePO$_4$, a secondary particle with an average particle diameter D$_{50}$ of 7 $\mu$m, were used in a ratio of 50:50, and the second positive electrode was coated with a loading amount of 300 mg/25cm$^2$ of the first positive electrode slurry and 300 mg/25cm$^2$ of the second positive electrode slurry.

**Example 6 to Example 7: Manufacture of positive electrode**

In each of the first positive electrode slurry and the second positive electrode slurry, the weight ratio of lithium iron phosphate, conductive material, fluorine-based binder, rubber-based binder, and rubber-based dispersant was changed as shown in Table 1, and the positive electrodes were prepared as in Example 1, except that the first positive electrode slurry was coated with a loading amount of 300 mg/25cm$^2$ and the second positive electrode slurry was coated with a loading amount of 300 mg/25cm$^2$.

**Comparative Example 1: Manufacture of positive electrode**

The aluminum foil was coated with the first positive electrode slurry prepared in Example 1 above at a loading amount of 600 mg/25cm$^2$.
The positive electrode was then prepared in the same manner as in Example 1.

**Comparative Example 2: Manufacture of positive electrode**

The aluminum foil was coated with the second positive electrode slurry prepared in Example 1 above at a loading amount of 600 mg/25cm$^2$.
The positive electrode was then prepared in the same manner as in Example 1.

**Comparative Example 3 to Comparative Example 4: Manufacture of positive electrode**

In each of the first positive electrode slurry and the second positive electrode slurry, the weight ratio of lithium iron phosphate, conductive material, fluorine-based binder, rubber-based binder, and rubber-based dispersant was changed as shown in Table 1, and the positive electrodes were prepared in the same manner in Example 1, except that the first positive electrode slurry was coated with a loading amount of 300 mg/25cm$^2$ and the second positive electrode slurry was coated with a loading amount of 300 mg/25cm$^2$.

**Comparative Example 5: Manufacture of positive electrode**

The positive electrodes were prepared as in Example 1, except that the first positive electrode slurry was coated with a loading amount of 60 mg/25cm$^2$ and the second positive electrode slurry was coated with a loading amount of 540 mg/25cm$^2$.

[Table 1]

| | | Lithium iron phosphate | | Conductive material | binder | | dispersant | slurry |
|---|---|---|---|---|---|---|---|---|
| | | First lithium iron phosphate: Second lithium iron phosphate | Lithium iron phosphate (wt%) | Carbon nanotubes (wt%) | PVdF (wt%) | HNBR (wt%) | HNBR (wt%) | Loading amount (mg/25 cm$^2$) |
| Example 1 | Second positive electrode slurry | 100:0 | 96.8 | 1.0 | 1.4 | 0.5 | 0.3 | 150 |
| | First positive electrode slurry | 100:0 | 96 | 1.0 | 2.2 | 0.5 | 0.3 | 450 |
| Example 2 | second positive electrode slurry | 100:0 | 96.8 | 1.0 | 1.4 | 0.5 | 0.3 | 300 |
| | First positive electrode slurry | 100:0 | 96 | 1.0 | 2.2 | 0.5 | 0.3 | 300 |
| Example 3 | Second positive electrode slurry | 100:0 | 96.8 | 1.0 | 1.4 | 0.5 | 0.3 | 450 |
| | First positive electrode slurry | 100:0 | 96 | 1.0 | 2.2 | 0.5 | 0.3 | 150 |
| Example 4 | Second positive electrode slurry | 100:0 | 96.8 | 1.0 | 1.4 | 0.5 | 0.3 | 300 |
| | First positive electrode slurry | 70:30 | 96 | 1.0 | 2.2 | 0.5 | 0.3 | 300 |
| Example 5 | Second positive electrode slurry | 100:0 | 96.8 | 1.0 | 1.4 | 0.5 | 0.3 | 300 |
| | First positive electrode slurry | 50:50 | 96 | 1.0 | 2.2 | 0.5 | 0.3 | 300 |

(continued)

| | | Lithium iron phosphate | | Conductive material | binder | | dispersant | slurry |
|---|---|---|---|---|---|---|---|---|
| | | First lithium iron phosphate: Second lithium iron phosphate | Lithium iron phosphate (wt%) | Carbon nanotubes (wt%) | PVdF (wt%) | HNBR (wt%) | HNBR (wt%) | Loading amount (mg/25 cm²) |
| Example 6 | Second positive electrode slurry | 100:0 | 95.99 | 1.2 | 1.8 | 0.65 | 0.36 | 300 |
| | First positive electrode slurry | 100:0 | 95.74 | 1.2 | 2.2 | 0.5 | 0.36 | 300 |
| Example 7 | Second positive electrode slurry | 100:0 | 96.3 | 1.0 | 1.8 | 0.6 | 0.3 | 300 |
| | First positive electrode slurry | 100:0 | 96.72 | 0.6 | 2.2 | 0.3 | 0.18 | 300 |
| Comparative Example 1 | Positive electrode slurry | 100:0 | 96 | 1.0 | 2.2 | 0.5 | 0.3 | 600 |
| Comparative Example 2 | Positive electrode slurry | 100:0 | 96.8 | 1.0 | 1.4 | 0.5 | 0.3 | 600 |
| Comparative Example 3 | Second positive electrode slurry | 100:0 | 96.26 | 0.8 | 2.2 | 0.5 | 0.24 | 300 |
| | First positive electrode slurry | 100:0 | 96.44 | 1.2 | 1.4 | 0.6 | 0.36 | 300 |
| Comparative Example 4 | Second positive electrode slurry | 100:0 | 96.44 | 1.2 | 2.0 | 0 | 0.24 | 300 |
| | First positive electrode slurry | 100:0 | 96.26 | 0.8 | 2.7 | 0 | 0.3 | 300 |

(continued)

| | | Lithium iron phosphate | | | Conductive material | binder | | dispersant | slurry |
|---|---|---|---|---|---|---|---|---|---|
| | | First lithium iron phosphate: Second lithium iron phosphate | Lithium iron phosphate (wt%) | Carbon nanotubes (wt%) | PVdF (wt%) | HNBR (wt%) | HNBR (wt%) | Loading amount (mg/25 cm$^2$) |
| Comparative Example 5 | second positive electrode slurry | 100:0 | 96.8 | 1.0 | 1.4 | 0.5 | 0.3 | 540 |
| | First positive electrode slurry | 100:0 | 96 | 1.0 | 2.2 | 0.5 | 0.3 | 60 |

## Experimental Example 1: Evaluation of adhesion of positive electrode

Each positive electrode manufactured in Examples 1 to 7 and Comparative Examples 1 to 5 was vacuum-dried at a temperature of 130 °C for 2 hours, and then adhesion between the positive electrode active material layer and the positive electrode current collector was measured, and the results are shown in Table 2.

Specifically, each positive electrode manufactured in Examples 1 to 7 and Comparative Examples 1 to 5 was cut to have a length of 150 mm and a width of 20 mm, and a positive electrode surface was attached in a lengthwise direction to a slide glass having a length of 75 mm and a width of 25 mm using a double-sided tape. That is, the slide glass was attached to a region corresponding to half of the lengthwise direction of the positive electrode. In addition, rubbing was performed 10 times using a roller so that the double-sided tape was uniformly attached, thereby preparing an evaluation sample.

Next, the slide glass part of the evaluation sample was fixed to the sample stage of a universal testing machine (UTM) (product name: LS5, manufacturer: LLOYD), and the half of the positive electrode to which the slide glass was not attached was connected to a load cell of the UTM. A load applied to the load cell was measured while moving the load cell up to 50 mm with a force at an angle of 90° and a speed of 100 mm/min. In this case, an average value of the load measured in the section of 20 mm to 40 mm during the driving section was obtained. This process was repeated a total of 5 times, and the average value was evaluated as positive electrode adhesion (gf/20 mm) of each sample.

## Experimental Example 2: Evaluation of flexibility of positive electrode

The flexibility of each of the positive electrodes prepared in Examples 1 to 7 and Comparative Examples 1 to 5 was measured after vacuum drying at a temperature of 130 °C for 2 hours, and the results are shown in Table 2.

Specifically, the positive electrode prepared in each of Examples 1 to 7, Comparative Examples 1 to 5 above was cut to a width of 10 cm and a length of 30 cm, 2. Prepare a measuring rod having a diameter of 2.5 ø, 3 ø, 4 ø, 5 ø, 6 ø, 7 ø, 8 ø, 9 ø, 10 ø, and then, with the positive electrode current collector side of each cut positive electrode facing the measuring rod, bend each cut positive electrode in half and lift both ends of the positive electrode at a speed of 10 mm per minute. Continue to lift until the force measured on the UTM is 5 N. Measure each phi and observe the electrode through an optical microscope for cracks, and if there are no cracks, proceed with the test with a smaller phi. The diameter (ø) of the measuring rod that occurs cracks accordingly is shown in Table 2.

## Experimental Example 3: Measuring fluoride weight

In each positive electrode according to the Examples and Comparative Examples, a sample of 100 mg was taken from each of the first positive electrode active material layer and the second positive electrode active material layer by each scraping the first positive electrode active material layer, and then, using a combustion reactor method, the weight of fluorine contained in each sample was measured, and the ratio of the weight P2 of fluorine contained in the second positive electrode active material layer to the weight P1 of fluorine contained in the first positive electrode active material layer (P2/P1) was calculated, and the results are shown in Table 2.

To determine the weight of fluoride contained in each sample, the gas generated by complete combustion of the sample of the first positive electrode active material layer and the sample of the second positive active material layer under high pressure oxygen conditions (40 atm) was captured in an absorbent solution. The gas capture absorbent solution was a 1 L solution containing 2.52 g $NaHCO_3$ and 2.52 g $Na_2CO_3$, and when fluoride ions were absorbed or dissolved in the gas capture absorbent solution, the fluoride weight of each sample was determined using ion chromatography. The ion chromatography column and analytical conditions were as follows.

Ion Chromatography: ICS-3000
Column: IonPac AS18 (4 X 250 mm)
Detector: suppressed conductivity detector
SRS current: 76Ma
Injection volume: 20uL

The same test was repeated three times and the average value is shown.

Based on the results of the ion chromatographic analysis results, the ratio (P2/P1) of the weight of fluorine contained in the second positive electrode active material layer, P2, to the weight of fluorine contained in the first positive electrode active material layer, P1, is shown in Table 2.

[Table 2]

|  | **P2/P1** | **adhesion (gf/20mm)** | **flexibility (ø)** |
|---|---|---|---|
| **Example 1** | 0.64 | 47 | 3 |
| **Example 2** | 0.64 | 41 | 2.5 |
| **Example 3** | 0.64 | 28 | 2.5 |
| **Example 4** | 0.64 | 60 | 3 |
| **Example 5** | 0.64 | 71 | 3 |
| **Example 6** | 0.82 | 56 | 2.5 |
| **Example 7** | 0.82 | 41 | 3 |
| **Comparative Example 1** | - | 50 | 5 |
| **Comparative Example 2** | - | 15 | 2.5 |
| **Comparative Example 3** | 1.57 | 12.6 | 3 |
| **Comparative Example 4** | 0.74 | 44 | More than 10 |
| **Comparative Example 5** | 0.64 | 19 | 2.5 |

The positive electrode according to Comparative Example 1, comprising a single-layer positive electrode having the composition of the respective first positive electrode active material layer of the positive electrode of each of the positive electrodes of Examples 1 to 3, and not comprising a second positive electrode active material layer, is shown to be much more flexible compared to the positive electrode according to the above examples. The positive electrode according to Comparative Example 2, comprising a single-layer positive electrode having the composition of the respective second positive electrode active material layer of the positive electrode of each of the positive electrode of Examples 1 to 3, and not comprising a first positive electrode active material layer, is shown to be much more adhesive compared to the positive electrode according to the above examples.

The positive electrode according to Comparative Example 3, wherein the ratio (P2/P1) of the weight P2 of the fluorine contained in the second positive electrode active material layer to the weight P1 of the fluorine contained in the first positive electrode active material layer exceeds 1, was found to have lower adhesion compared to the positive electrode of each of the examples.

The positive electrode according to Comparative Example 4, which does not include a rubber-based binder, was found to have lower flexibility compared to each of the positive electrode of the Examples.

By comparing the respective adhesion of the positive electrodes according to Examples 1 to 3 and Comparative Example 5, it is found that the adhesion of the positive electrode according to Comparative Example 5, wherein the weight (A) of the first positive electrode active material layer is 10% of the total weight (A+B) of the first and second positive electrode active material layers, is the lowest, and the adhesion of the positive electrode according to Example 1, wherein the weight ratio of the first positive electrode active material layer is the largest, 75%, is the best. Therefore, in the present invention, it is preferable to increase the weight ratio of the first positive electrode active material layer to increase the adhesion, and it seems that the weight (A) of the first positive active material layer should exceed 10% of the total weight (A+B) of the first positive electrode active material layer and the second positive electrode active material layer to secure a minimum adhesion.

Comparing the respective flexibility of the positive electrodes according to Examples 1 to 3 and Comparative Example 5, it can be seen that the smaller the ratio of the weight (A) of the first positive electrode active material layer to the total weight (A+B) of the first and second positive electrode active material layers, the more favorable the flexibility. However, considering that the difference in their flexibility is not large, it seems that it is preferable that the weight (A) of the first positive electrode active material layer is 25% to 75% of the total weight (A+B) of the first and second positive electrode active material layers in order to secure both flexibility and adhesion.

On the other hand, the positive electrode according to Example 4 and Example 5, which includes a first lithium iron phosphate having an average particle diameter $D_{50}$ of 1.1 $\mu$m and a second lithium iron phosphate having an average particle diameter $D_{50}$ of 7 $\mu$m as the positive electrode active material in the first positive electrode active material layer, shows much better adhesion compared to the positive electrode according to Example 2. From this, it is expected that if the particle size of the positive electrode active material in the first positive electrode active material layer facing the current collector is controlled in a bimodal form, the effect of improving the adhesion between the positive electrode current collector and the active material layer is maximized.

Although the invention is shown and described in connection with particular embodiments, it will be readily apparent to those of ordinary skill in the art that various modifications and variations are possible without departing from the spirit and scope of the invention shown in the appended claims.

Therefore, the technical scope of the present invention should not be limited to what is described in the detailed description of the specification, but should be defined by the scope of the claims.

**Claims**

1. A positive electrode comprising:

   a positive electrode current collector;
   a first positive electrode active material layer formed on one or both sides of the positive electrode current collector; and
   a second positive electrode active material layer formed on the first positive electrode active material layer;
   wherein the first and second positive electrode active material layers each comprise lithium iron phosphate, a conductive material, a fluorine-based binder, a rubber-based binder, and a rubber-based dispersant, and the ratio (P2/P1) of the weight P2 of the fluorine contained in the second positive electrode active material layer to the weight P1 of the fluorine contained in the first positive electrode active material layer is 1 or less, and the weight (A) of the first positive electrode active material layer is in the range of 17% to 99% of the total weight (A+B) of the first positive electrode active material layer and the second positive electrode active material layer.

2. The positive electrode of claim 1, wherein the weight (A) of the first positive electrode active material layer range from 20% to 85% of the total weight (A+B) of the first positive electrode active material layer and the second positive electrode active material layer.

3. The positive electrode of claim 1, wherein the rubber-based binder and the rubber-based dispersant are hydrogenated nitrile butadiene rubber (HNBR), respectively.

4. The positive electrode of claim 3, wherein the rubber-based binder is a hydrogenated nitrile butadiene rubber (HNBR) having a weight-average molecular weight (Mw) of at least 130,000 g/mol.

5. The positive electrode of claim 3, wherein the rubber-based binder is a hydrogenated nitrile butadiene rubber (HNBR) having a weight-average molecular weight (Mw) in the range of 150,000 g/mol to 1,000,000 g/mol.

6. The positive electrode of claim 3, wherein the rubber-based dispersant is a hydrogenated nitrile butadiene rubber (HNBR) having a weight-average molecular weight (Mw) in the range of 10,000 g/mol to 100,000 g/mol.

7. The positive electrode of claim 1, wherein the lithium iron phosphate included in the first positive electrode active material layer comprises a first lithium iron phosphate having an average particle diameter $D_{50}$ of 0.5 $\mu$m to 2 $\mu$m and a second lithium iron phosphate having an average particle diameter $D_{50}$ of 3.5 $\mu$m to 15 $\mu$m.

8. The positive electrode of claim 7, wherein the weight ratio of the first lithium iron phosphate and the second lithium iron phosphate is 50:50 to 99.9: 0.1.

9.  The positive electrode of claim 7, wherein the lithium iron phosphate included in the second positive electrode active material layer has an average particle diameter $D_{50}$ of 0.6 $\mu$m to 3.0 $\mu$m.

10. The positive electrode of claim 1, wherein the lithium iron phosphate is the compound represented by Formula 1 below:

[Formula 1]  $Li_{1+a}Fe_{1-x}M_x(PO_{4-b})X_b$

In Formula 1 above, M comprises one or more elements selected from the group consisting of Al, Mg, Ni, Co, Mn, Ti, Ga, Cu, V, Nb, Zr, Ce, In, Zn, and Y, X comprises one or more elements selected from the group consisting of F, S, and N, and a, b, and x are $-0.5 \leq a \leq 0.5$, $0 \leq b \leq 0.1$, and $0 \leq x \leq 0.5$, respectively.

11. The positive electrode of claim 1, wherein the fluorine-based binder is a polyvinylidene fluoride (PVdF)-based polymeric binder.

12. The positive electrode of claim 1, wherein the fluorine-based binder is included in the first positive electrode active material layer in an amount ranging from 1.5 wt% to 3.0 wt%.

13. The positive electrode of claim 1, wherein the fluorine-based binder is included in the second positive electrode active material layer in an amount ranging from 0.8 wt% to 2.4 wt%.

14. The positive electrode of claim 1, wherein the rubber-based binder included in each of the first and second positive electrode active material layers satisfy condition 1 below:

[Condition 1]

$$1 \leq R2/R1 \leq 3$$

R1 indicates the content (wt%) of rubber-based binder in the first positive electrode active material layer, R2 indicates the content (wt%) of rubber-based binder in the second positive electrode active material layer.

15. The positive electrode of claim 1, wherein the rubber-based binder is included in the first positive electrode active material layer in an amount ranging from 0.2 wt% to 0.9 wt% and in the second positive electrode active material layer in an amount ranging from 0.3 wt% to 1.0 wt%.

16. The positive electrode of claim 1, wherein the conductive material is carbon nanotubes.

17. The positive electrode of claim 1, wherein the conductive material is included in each of the first and second positive electrode active material layers, in an amount ranging from 0.3 wt% to 2.0 wt%.

18. A lithium secondary battery comprising the positive electrode of any one claim among claim 1 to 17.

| INTERNATIONAL SEARCH REPORT | International application No. |
| --- | --- |
| | **PCT/KR2023/020753** |

**A. CLASSIFICATION OF SUBJECT MATTER**

**H01M 4/136**(2010.01)i; **H01M 4/62**(2006.01)i; **H01M 4/58**(2010.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/136(2010.01); H01M 10/052(2010.01); H01M 10/0525(2010.01); H01M 4/02(2006.01); H01M 4/13(2010.01); H01M 4/133(2010.01); H01M 4/139(2010.01); H01M 4/58(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지(lithium secondary battery), 양극(cathode), 집전체(current collector), 양극 활물질(cathode active material), 리튬 인산철(lithium iron phosphate), 도전재(conductive material), 불소계 바인더(fluorine-based binder), 고무계 바인더(rubber-based binder), 고무계 분산제(rubber dispersant)

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2022-0128304 A (LG ENERGY SOLUTION, LTD.) 20 September 2022 (2022-09-20) See claims 1-4 and 11; and paragraphs [0085], [0099] and [0146]-[0147]. | 1-18 |
| Y | KR 10-2022-0119818 A (LG ENERGY SOLUTION, LTD.) 30 August 2022 (2022-08-30) See claims 1-3; and paragraphs [0080] and [0087]-[0088]. | 1-18 |
| Y | KR 10-2021-0001299 A (LG CHEM, LTD.) 06 January 2021 (2021-01-06) See claims 1-3 and 8; and paragraph [0075]. | 14-15 |
| A | KR 10-2017-0075963 A (LG CHEM, LTD.) 04 July 2017 (2017-07-04) See entire document. | 1-18 |
| A | KR 10-2021-0108566 A (LG ENERGY SOLUTION, LTD.) 03 September 2021 (2021-09-03) See entire document. | 1-18 |

☑ Further documents are listed in the continuation of Box C.    ☑ See patent family annex.

| | | |
| --- | --- | --- |
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "D" document cited by the applicant in the international application | "X" | document of particular relevance; the claimed invention cannot be considered novel or cannot be considered to involve an inventive step when the document is taken alone |
| "E" earlier application or patent but published on or after the international filing date | | |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
| --- | --- |
| **28 March 2024** | **28 March 2024** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/020753** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2022-203149 A1 (LG ENERGY SOLUTION, LTD.) 29 September 2022 (2022-09-29)<br>See entire document. | 1-18 |

Form PCT/ISA/210 (second sheet) (July 2022)

**INTERNATIONAL SEARCH REPORT**
**Information on patent family members**

International application No.

**PCT/KR2023/020753**

| Patent document cited in search report | | | Publication date (day/month/year) | Patent family member(s) | | | Publication date (day/month/year) |
|---|---|---|---|---|---|---|---|
| KR | 10-2022-0128304 | A | 20 September 2022 | CN | 115516661 | A | 23 December 2022 |
| | | | | EP | 4181229 | A1 | 17 May 2023 |
| | | | | JP | 2023-541161 | A | 28 September 2023 |
| | | | | KR | 10-2625654 | B1 | 16 January 2024 |
| | | | | US | 2024-0021830 | A1 | 18 January 2024 |
| | | | | WO | 2022-191645 | A1 | 15 September 2022 |
| KR | 10-2022-0119818 | A | 30 August 2022 | CN | 115244731 | A | 25 October 2022 |
| | | | | EP | 4089761 | A1 | 16 November 2022 |
| | | | | JP | 2023-520363 | A | 17 May 2023 |
| | | | | US | 2023-0170480 | A1 | 01 June 2023 |
| | | | | WO | 2022-177242 | A1 | 25 August 2022 |
| KR | 10-2021-0001299 | A | 06 January 2021 | CN | 112585784 | A | 30 March 2021 |
| | | | | EP | 3828963 | A1 | 02 June 2021 |
| | | | | EP | 3828963 | A4 | 15 December 2021 |
| | | | | US | 2022-0223843 | A1 | 14 July 2022 |
| | | | | WO | 2020-263023 | A1 | 30 December 2020 |
| KR | 10-2017-0075963 | A | 04 July 2017 | KR | 10-2071585 | B1 | 30 January 2020 |
| KR | 10-2021-0108566 | A | 03 September 2021 | None | | | |
| WO | 2022-203149 | A1 | 29 September 2022 | CN | 115443554 | A | 06 December 2022 |
| | | | | EP | 4113655 | A1 | 04 January 2023 |
| | | | | JP | 2023-523139 | A | 02 June 2023 |
| | | | | KR | 10-2022-0134103 | A | 05 October 2022 |
| | | | | US | 2023-0118719 | A1 | 20 April 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220177477